# EUROPEAN PATENT APPLICATION

(11) **EP 4 578 274 A1**
(43) Date of publication of application: **02.07.2025**
(21) Application number: 24218070.1
(22) Date of filing: 06.12.2024
(51) Int. Cl.: A01G 17/06, E04H 17/02

(54) **IMPROVED ELASTIC COMPENSATION DEVICE FOR TENSIONING PLANTS SUPPORT WIRE, SUPPORT SYSTEM FOR SAID PLANTS INCLUDING SUCH DEVICE AND RELATED SUPPORT METHOD**

(30) Priority: 28.12.2023 IT 202300028161
(71) Applicant: Bortolussi, Claudio, 33080 Fiume Veneto (PN) (IT); Bortolussi, Franco, 33080 Fiume Veneto (PN) (IT)
(72) Inventor: Bortolussi, Claudio, 33080 Fiume Veneto (PN) (IT); Bortolussi, Franco, 33080 Fiume Veneto (PN) (IT)
(74) Representative: Giugni, Diego

(57) **Abstract**

The present invention relates to device for tensioning wires for supporting the vegetation of plants, preferably orchards and especially vineyards. In particular, the invention relates to a device that is particularly versatile, easy to use and cost-effective to produce. The invention also relates to a plant comprising such device and method for supporting plants in rows.

## Description

### FIELD OF THE INVENTION

**.** The present invention relates to device for tensioning wires for supporting the vegetation of plants, preferably orchards and especially vineyards. In particular, the invention relates to a device that is particularly versatile, easy to use and cost-effective to produce. The invention also relates to a plant comprising such device and method for supporting plants in rows.

### BACKGROUND OF THE INVENTION

**.** In agriculture, and in particular in the viticulture industry, it is well known to provide support structures for plants consisting of rows of poles driven into the ground so as to form rows. The poles are spaced apart from each other and they are interconnected in their parts protruding from the ground by a horizontal wire, called a "load-bearing wire", which is fixed on said poles at an appropriate height from the ground surface. Furthermore, at least one pair of wires parallel to each other and arranged on respective sides of each pole of the row are fixed on the two poles which are located at the ends of each row, called "head poles". These wires are commonly referred to as "containment wires" or "movable wires" given that, during the various stages of plant cultivation, they are moved to different heights from the ground to contain and organise the growing vegetation according to a desired configuration. As a matter of fact, in winter, when vine shoots are very short or are completely absent, pairs of movable wires are arranged close to the ground. In the spring and summer, when the plants produce ever more luxuriant vegetation, each pair of movable wires is placed progressively further away from the ground in the direction orthogonal to the ground, harnessing the vegetation between the wires of each pair, therefore organising the development thereof according to a desired configuration. This operation is commonly carried out to ensure an increasing exposure of the foliar surface and the fruits of the plants to the sun and wind. Furthermore, this facilitates vegetation treatment operations such as clipping, plant protection treatments and other fully conventional treatments.

**.** It is clear that both the load-bearing wire and the movable wires must be fixed to the ends of the rows and tensioned in order to perform their function correctly. At the same time, especially the movable wires, must be capable of having a certain degree of extensibility to meet the aforementioned need to support the growth of the leaf surface.

**.** Therefore, especially with regard to the movable wires, their tensioning to the pole must comprise an elastically compensating element coupled to a tensioning element to allow the displacement described above on the lateral plane of the system for supporting the plants. A fixing device of this type is described for example in patent EP1699286, wherein a wire tensioning roller formed by a rectilinear metal bar, generally cylindrical or hexagonal, comprising at least one shaped end portion so as to be engaged by a tool such as a hexagonal head key, and a through hole passing in proximity of one of its two end portions which can be engaged by a pin for locking against the unwanted rotation of the roller upon tensioning the load-bearing wire or movable wires. A pair of further through holes are required for the engagement and winding of the movable wires. The roller is mounted on the compensation device represented by a compression spring. The compression spring is formed by three elements, that is an actual spring which is compressed between an element for engaging to the pole and an abutment element.

**.** Other devices are for example described in patents EP3672396 and EP3716755 wherein the abutment element mentioned above of the compression spring is formed by a plate carrying one or more tensioning elements, said plate being engaged or resting on an end of the spring. In other words, the elastically compensating devices of the prior art require three elements to operate and that is two elements for containing a compression spring and the spring, besides the tensioning element.

**.** The tensioning elements may then be formed by a block of clamping type provided with a solid body provided with at least one internal channel adapted to slide a wire in communication with a ramp cavity adapted to house a device for the selective sliding of said wires in only one direction, while it allows the sliding in the opposite direction. The locking device is for example a spring which acts on a ball element adapted to interact with the wire. Such device is for example described in the patent application WO2016/102907.

**.** Another tensioning element has a body formed by a hollow element having a tapered outer surface and a doughnut-like shaped head fixed to the body for example by welding forming or moulding, and protruding slightly therefrom in radial direction. In the tapered body, in the proximity of the opening of the narrower side thereof, there are present retention means, for example wedge-shaped elements, which protrude from the internal edges of the body towards the centre of the cavity, closing it partially. Said retention means are associated with an end of a counteracting element formed by a spring operating by compression which, on the other end, abuts against the inner surface of the head. The pressure exerted by the wire at the entrance of the body between the retention means causes the compression of the spring associated therewith and it therefore allows the insertion of the wire into the locking element. Once the pressure exerted by the force for inserting the wire into the locking element has ceased, that is upon reaching the desired degree of tensioning of the wire, the counteracting spring pushes the retention means towards the inoperative position thereof ensuring that they are wedged between the inner surface of the body and the wire preventing the latter from slipping off. In other words, the locking element is internally configured to allow a wire to pass through it only in one direction, preventing, through suitable retention means, the possibility that the latter slips off sliding in the opposite direction, in a manner entirely similar to what happens with the device described in WO2016/102907.

**.** Despite being effective in their operation, all prior art tensioning elements are more or less structurally complex and, therefore, require particular processing operations for the production thereof which obviously reflect on the relative costs. As a matter of fact, also the simpler element represented by the device described in patent EP 1699286 however requires machines for the moulding and processing of a bar or metal billet to obtain a roller with an end which can be engaged by a rotary tool, as well as a hole for engaging the stop element.

**.** With regard to the block and cone of clamping type, there is a further drawback lying in the fact that the respective internal mechanism may be subject to malfunctions caused by the entry of powder grains, stones or soil which prevent the spring from operating correctly. Furthermore, in order to actuate at least the block there is provided for a specific tool consisting of a sort of gripper with large arms, an end for supporting the block and an end for gripping the wire, the latter being actuatable so as to pull the end portion of the wire in the tensioning direction. In addition, both the block and the cone need a further support element so as to be correctly applied to the elastically compensating element, such as for example an abutment plate. As a matter of fact, for example as described in patents EP3672396 and EP3716755, the tensioning elements are mounted on abutment plates of the spring.

**.** As a result, the structure of an elastically compensating device for tensioning wires according to the prior art is at least complex from a construction point of view, both for the component relating to the elastic compensation and with regard to the component of the tensioning element. Also the relevant assembly becomes complex as a result.

### SUMMARY OF THE INVENTION

**.** Therefore, the task of the present invention is to provide an elastically compensating device for tensioning wires, in particular for load-bearing wires and movable support wires for vine shoots or plant branches, that overcomes the defects and drawbacks of the devices of the known type like the ones described above.

**.** In the context of the task outlined above, therefore an object of the present invention to provide an elastically compensating device for wires that is very easy to construct and quick to install on a pole of a row of plants, and that is also easy to actuate, assemble and cost-effective to manufacture.

**.** Another object is to provide a compensating device for wires which can be mounted on any type of pole for rows of plants irrespective of the shape and size of the cross-section of the pole.

**.** A further object of the present invention is to provide a device whose overall dimensions do not substantially alter the overall dimensions of the elements on which it is mounted so as not to affect the processing operations especially mechanised along the rows.

**.** An even further object of the present invention is to provide a device, in particular for movable wires for supporting vine shoots or plant branches, substantially without malfunctions.

**.** Other objects are a system for supporting plants in rows and a method for supporting plants in rows comprising such device.

### BRIEF DESCRIPTION OF THE DRAWINGS

**.** The task and objects outlined above are attained by an elastically compensating device having the characteristics outlined in the attached claims. Characteristics and advantages of the invention will be apparent from the following description, provided by way of non-limiting example, with reference to the attached drawings, wherein:
- figure 1 shows a schematic view of a system for supporting a row of vines;
- figure 2 shows an axonometric and exploded view of an elastically compensating device comprising a tensioning element according to the invention;
- figure 3 shows a lateral view of the elastically compensating device of figure 2;
- figure 4 show a top view of the elastically compensating device of figure 2;
- figure 5 shows a cross-sectional view along the plane V-V of the device of figure 4;
- figure 6 shows an axonometric view of the device of figure 2 in a first step for assembling on a pole;
- figure 7 shows an axonometric view of the device of figure 2 in a second step for assembling on a pole;
- figure 8 shows an axonometric view of the device of figure 2 in a third step for assembling on a pole;
- figure 9 shows an axonometric view of the device of figure 2 in a final step for assembling on a pole;
- figure 10 shows an axonometric view of the device of figure 2 in a first step for assembling a tensioning element;
- figure 11 shows an axonometric view of the device of figure 2 in a second step for assembling a tensioning element;
- figure 12 shows an axonometric view of the device of figure 2 in a third step for assembling of a tensioning element;
- figure 13 shows an axonometric view of the device of figure 2 with a tensioning element;
- figure 14 shows an axonometric view of the device of figure 13 in a first step of engagement with a wire to be tensioned;
- figure 15 shows an axonometric view of the device of figure 13 in a second step of engagement with wire to be tensioned;
- figure 16 shows an axonometric view of the device of figure 13 with a wire blocked tensioned.

### DETAILED DESCRIPTION OF THE INVENTION

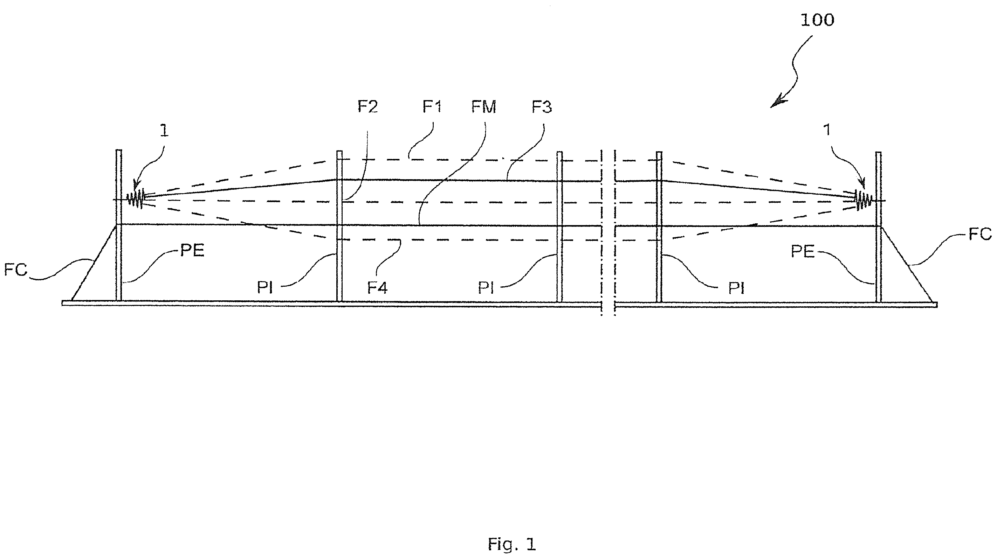

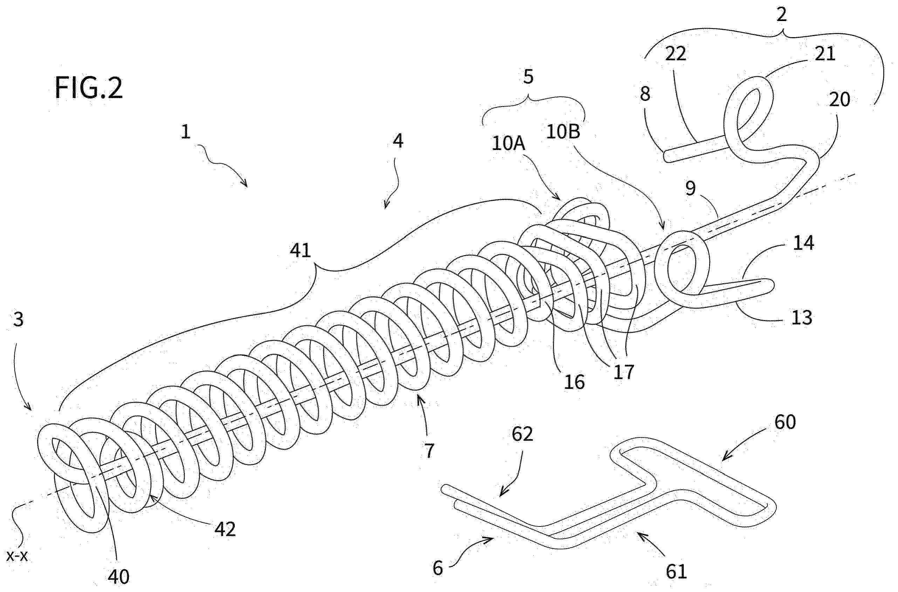

**.** Figure 2 shows in exploded view an elastically compensating device 1 for tensioning wires F for containing the vegetation. This type of device is used in a system 100 for supporting plants in a row. Usually, the plant (figure 1) consists of a plurality of poles arranged aligned and spaced apart from each other. As known, the poles may consist of appropriate elements made of wood, concrete cement or even made of metal or plastic, having cross-sections of different shapes and often provided with elements and/or devices for hooking, even reversible, metal wires thereon. The poles resulting at the ends of the row, called "head poles", are indicated with reference PE and the intermediate ones with PI. On all the poles PE and PI there is fixed at an appropriate height from the ground a fixed wire FM called "load-bearing wire". Furthermore, the head poles are suitably wind-braced by appropriate wind-bracing wires indicated with reference FC. On the two head poles PE there are further provided for elastically compensating devices 1 arranged at an appropriate distance from the ground; in the example shown in figure 1 the elastically compensating devices 1 are arranged in a position higher than the one for fixing the load-bearing wire FM. To each elastically compensating device 1 there is associated a pair of movable wires F which are arranged on both sides of the intermediate poles PI, that is the sides defined by the system. Thanks to the elasticity of the compensation devices 1, the movable wires F may be fixed using simple operations for engaging to suitable support, per se conventional, obtained or applied on the relative intermediate poles PI so as to be positioned at different heights from the ground. In order to highlight the various possible positionings of the movable wires F, a numerical symbol was added to the common reference F. Furthermore, the position of the wire F3 alone is indicated with a solid line while the others, and precisely the positions of the two lower movable wires and that of the wire above the wire F3, are indicated with dashed lines and respectively with references F1, F2 and F4. The movable wires are also called wires for containing the growing vegetation given that in the space defined between them the vegetation is contained and supported during growth. Alternatively, for each elastically compensating device there may be associated a single wire to be tensioned so as to have individual wires that can be moved independently with respect to each other. In this case, there can be fitted two pole devices on the two sides of the pole.

**.** With reference to figures 2-4 described below is an elastically compensating device 1 for tensioning wires F according to the present invention.

**.** This device extends along an axis X-X and comprises a first end 2 for hooking to a pole, a second end portion 3 opposite to said first end portion, a compression elastic element 4 between said first and second end portion, a seat 5 for engaging with a wire tensioning element 6, wherein said first and second end portion, said elastic element and said seat are formed by a single shaped wire 7 with a first end 8 which is the end of said first end portion, a rectilinear portion 9 which extends from said first end portion and terminates with a first coil 40 which forms said second end portion, a plurality 41 of coils which extend from said first coil around said rectilinear portion forming said elastic element 4, two slots 10A, 10B having an axis Y-Y that is common and transversal to said axis X-X and formed by the continuation of said plurality of coils, followed by a rectilinear segment 14 orthogonal to said axis X-X and terminating with a second end 11 of said single wire 7.

**.** In particular, the device of the invention is advantageous given that with a single duly shaped wire there are obtained all the elements required to perform the function of an elastically compensating element, leaving separated only the tensioning element, which can however be easily engaged and handled with the compensating element.

**.** The shaped wire 7 is generally made of stainless steel, it has a diameter ranging from 3 mm to 5.5 mm, preferably it measures 3.5 mm and it extends with different segments but without interruptions from the first end 8 to the second end 11.

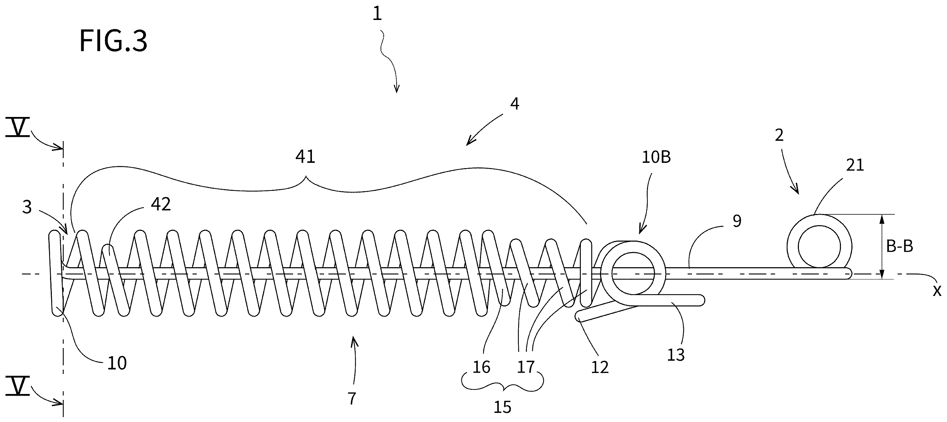

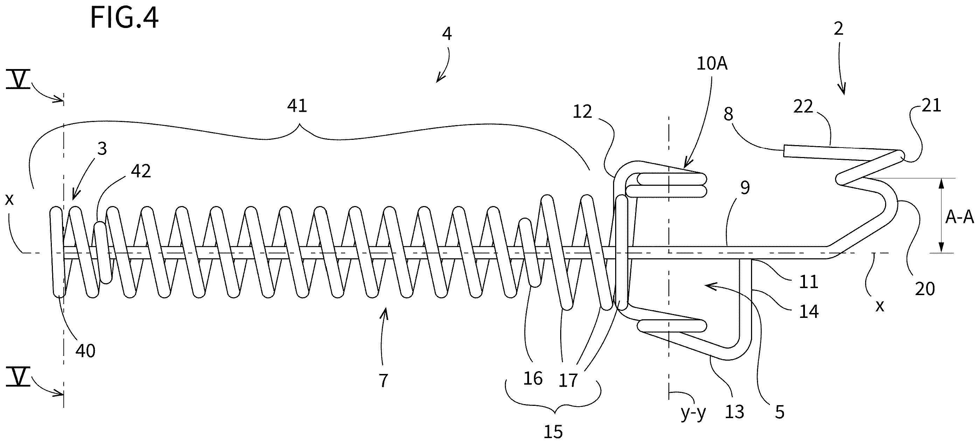

**.** As shown in figure 2, the first end portion 2 of the wire comprises the first end 8 and it is shaped so as to allow the engagement to a head pole PE. This end portion may be shaped to be engaged to any type of pole. As a matter of fact, given the wire-like structure, it can be bent to form a ring with one or more coils substantially closed forming an engagement slot with a hook or chain to be applied to a hole, hook or circumference of a pole made of iron, plastic, concrete or wood. Otherwise, the end portion, as shown in the figures, is formed by a generally hook-shaped bending for engagement with one or more holes of a pole made of steel. Preferably, the folding comprises a first generally U-shaped folding 20 which represents the continuation of the rectilinear portion 9 and which lies on a first plane A-A along the axis X-X (figure 4). Said continuous U with a ring-like bending 21 facing towards one side of the axis X-X and which extends on a plane B-B (fig. 3) which is generally orthogonal to said first plane A-A of the first folding. Said ring 21 continues with a rectilinear portion 22 which extends toward the device and parallel to the axis X-X terminating with said end 8.

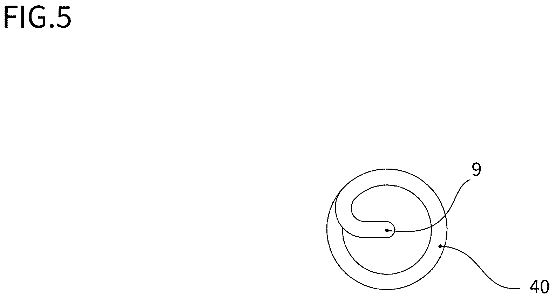

**.** At the second end 3 of the device 1, the wire 7 forms a first coil 40 which lies on a plane V-V (figure 5) orthogonal to said rectilinear portion 9, that is orthogonal to the axis X-X. After the first coil 40, the wire continues with a plurality 41 of coils which are wound around the rectilinear portion 9 towards the first end portion 2 of the device (figures 2 and 4). The number of coils, the pitch and the diameter vary depending on the specific needs or preferences for example determined by the diameter of the wire or by the load to which the wire to be tensioned is to be subjected. In any case, these data are all within the reach of the person skilled in the art when designing a system.

**.** Near the first end portion 2 of the device, the plurality of coils 41 terminates the winding around the rectilinear portion 9 and forms a single slot 10A on one side of said portion, whose axis Y-Y is orthogonal to the axis X-X. Afterwards, the single wire 7 with a rectilinear segment 12 passes through the axis X-X and on the opposite side with respect to said first slot 10A folds to form a second slot 10B with axis coinciding with said axis Y-Y of the first slot. Preferably, said first slot 10A is formed by a pair of superimposed rings for engagement with the element 6 for winding the wire to be tensioned. Furthermore, the second slot 10B comprises one or more rings which continue with a segment 13 that is inclined with respect to the axis X-X and moving away towards the first end portion 2, followed by a terminal segment 14 that is rectilinear and orthogonal to the axis X-X which terminates with the second end 11 of the single wire 7.

**.** The first 10A and second 10B slots therefore form a seat for engagement with a tensioning element 6. This element may be a conventional wire tensioning roller provided with two annular seats for engagement with the ring of the slots so as to allow the free rotation thereof without the danger of transverse movements during the winding of a wire. Alternatively, the element may be represented by a sort of key with a wide gripping head, an elongated body for the winding of the wire and legs which can be moved away from each other so as to avoid the accidental removal of the element from said first and second slots.

**.** Preferably, the element 6, as shown in the figures, is formed by a key having a wide and flat head 60 from which there departs a rectilinear and thin body 61 which terminates with at least one leg 62. In particular, the leg is bent orthogonally with respect to said body. Advantageously, the element is formed by a single metallic piece of wire folded to form the ring-like head, the body with two rectilinear segments and two legs which form the end segments of the piece.

**.** Preferably, the wire is bent to form the various parts of the head, body and legs so as to lie on a single plane. More preferably, the head is a rectangular ring and the legs are arranged adjacent parallel to each other.

**.** According to a variant of the invention, after the first coil 40 mentioned above, the second end portion 3 of the device 1 comprises a second coil 42 which are wound around the rectilinear portion 9 more closely with respect to the first coil and to the subsequent plurality of coils 41. This second coil has the function of stabilising the device especially when subjected to particular compressions, for example during the displacements of the wire upwards and downwards with respect to the horizontal position. As a matter of fact, during such displacements, the plurality of coils 40, that is the elastic element, is strongly compressed and tends to bend with respect to the axis X-X. In some situations, for example during the processing operations near the plants, the farming machines could impact the devices bent outwards damaging the devices or the machines.

**.** The second coil 42, instead, tends to keep the wire stretched near if not adhering to the rectilinear portion, therefore in axis with respect to the compression forces exerted on the elastic part of the device. As a result, the folding phenomenon mentioned above is significantly limited if not eliminated, with the advantage of avoiding the protruding dangerously with respect to the vertical plane of the system of the vineyard.

**.** According to a further variant of the invention, the device 1 may comprise a seat 15 for retaining a wire tensioning element of clamping type. In particular, such seat is formed by several windings of the plurality of coils 41 shaped to create a sort of pocket for holding a wire tensioning element of clamping type. Preferably, the seat is formed by a first coil 16 for resting clamped around a segment of the rectilinear portion 9 of the wire 7 and by at least one second containment coil 17. The first coil is closer to the second end portion 3 while the second coil is connected with the coils of the seat 5 for the key or roller tensioning element 6.

**.** In this manner, the seat 15 may alternatively or combined house a further tensioning element for a wire F to be tensioned. As a matter of fact, should there arise the need to use a clamping tensioning element, specifically combined or alternatively to the key or roller element 6 described above, one can place such element into said seat so as to receive the wire to be tensioned. These clamping elements are represented for example by cones or by blocks inside which there is present a channel kept at least partially obturated by a ball or ramp block on which a spring acts. These elements are described for example in patent EP3672396.

**.** Therefore, the seat 15 may be shaped at will so as to accommodate the cones or blocks comfortably and without dangerous clearances or couplings, simply by forming a second coil, or several second coils, with circular ring with conical and/or squared ring development.

**.** The assembly and the operation of the device of the invention is intuitively simple, safe and effective.

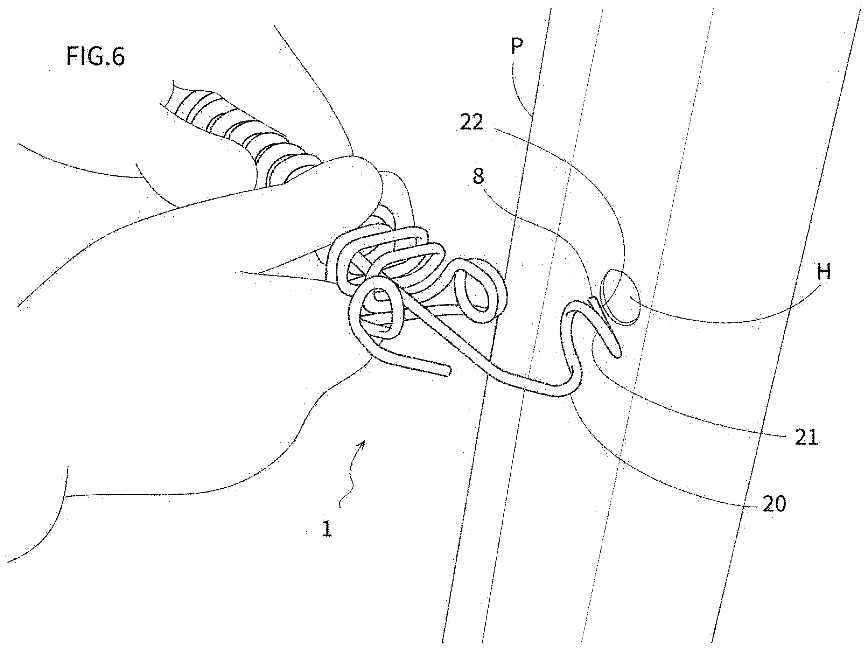

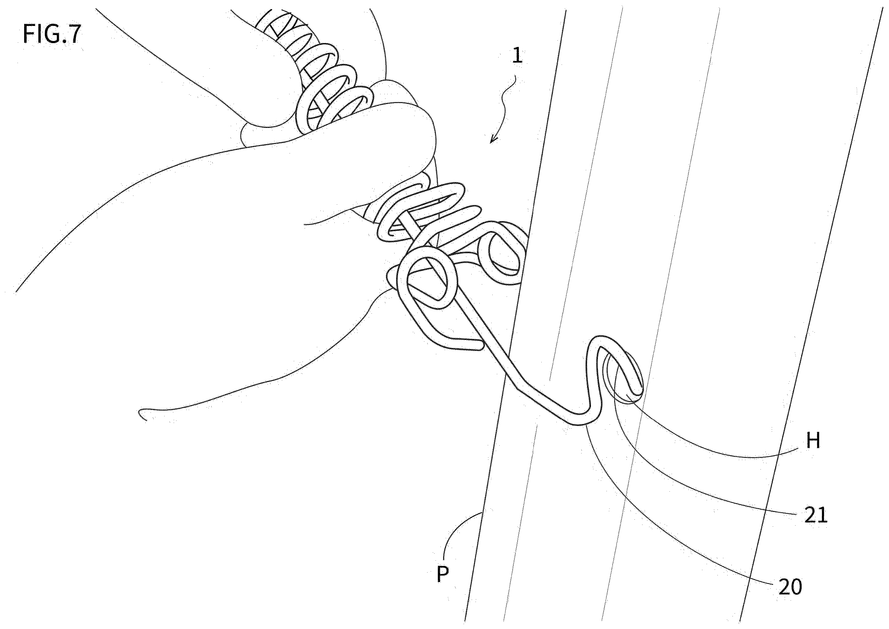

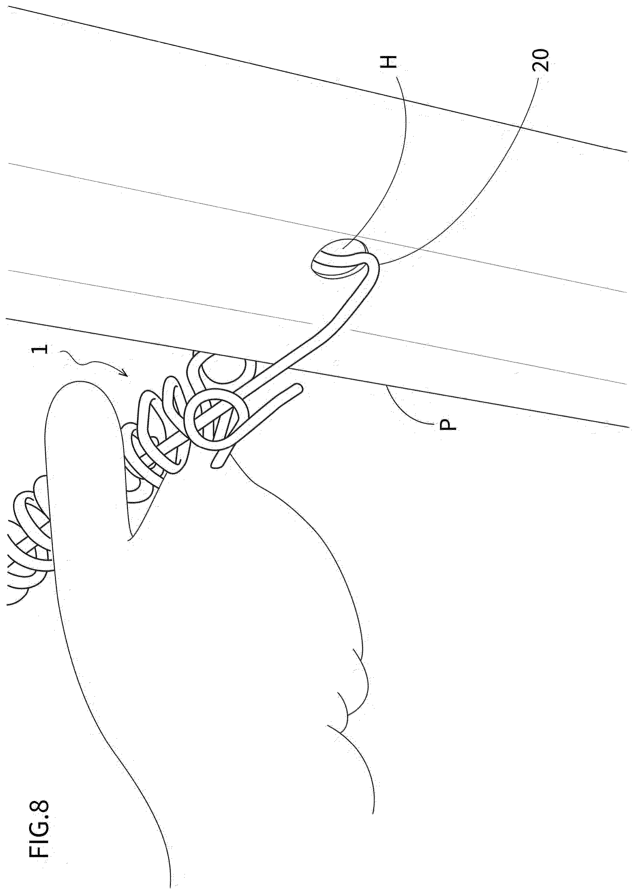

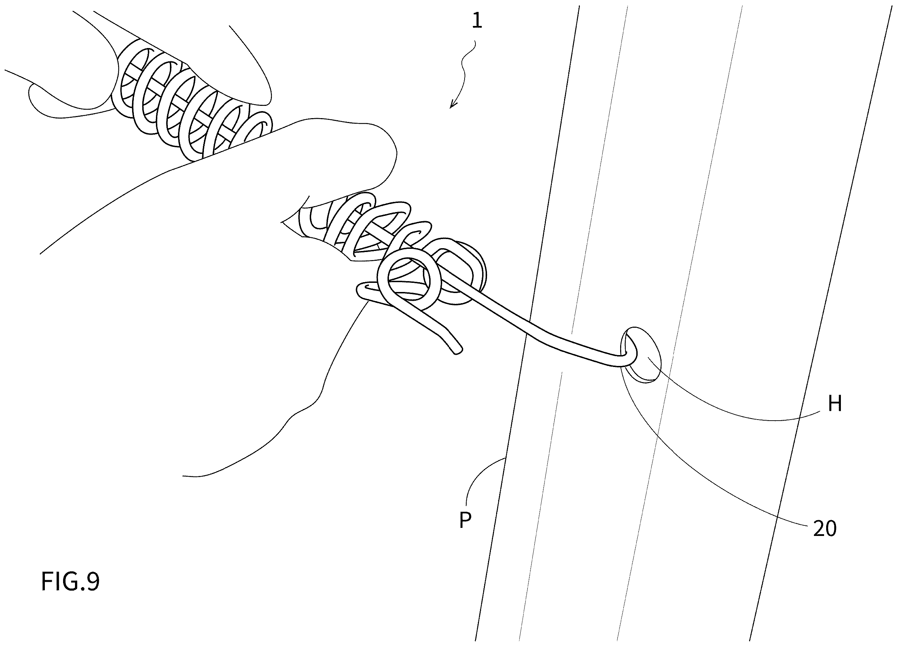

**.** As a matter of fact, with reference to figures 6-9, the device may be engaged to a head pole P depending on the conformation of the first end portion. Preferably, as described and represented above, the end 8 and the rectilinear segment 22 is inserted into an iron pole through one of its conventional side holes H (figure 6). Subsequently, possibly with one or more rotation operations in the clockwise or anticlockwise direction should the hole be small, the ring-like bending 21 is inserted with slight inclination into the pole (figures 7, 8). Lastly, the U-shaped folding 20 is made to be engaged by the edge of the hole of the pole (figure 9). Therefore, the ring 21 and the rectilinear segment 22 in the pole act as a safety hook against accidental removal of the device by the pole.

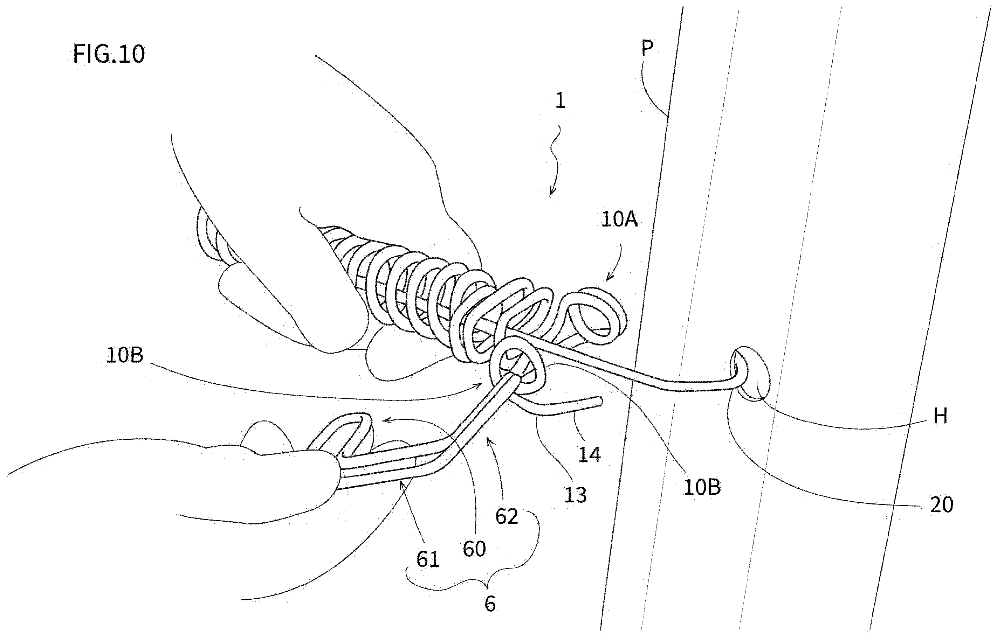

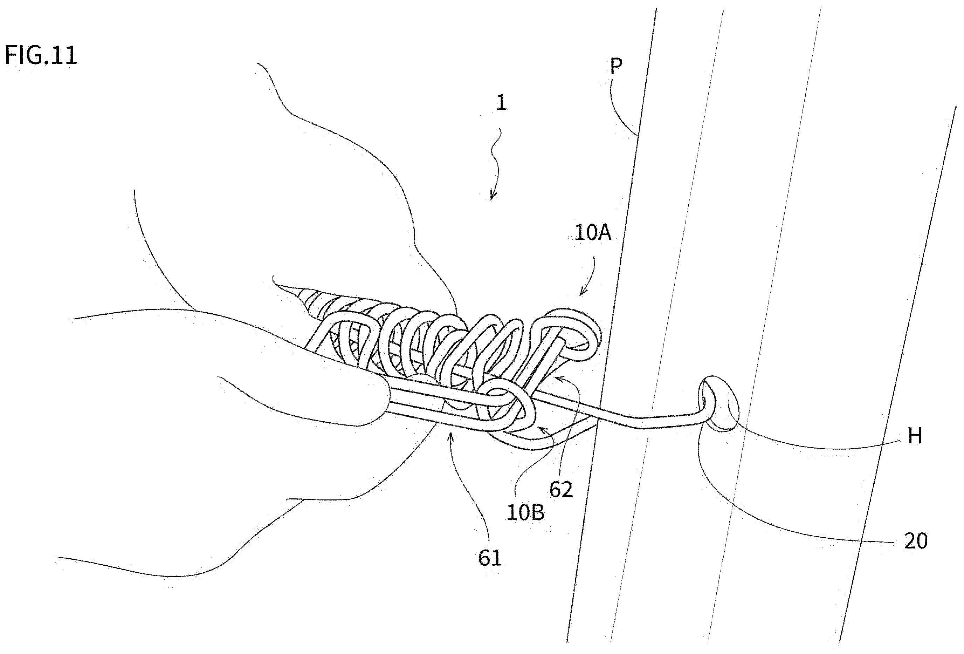

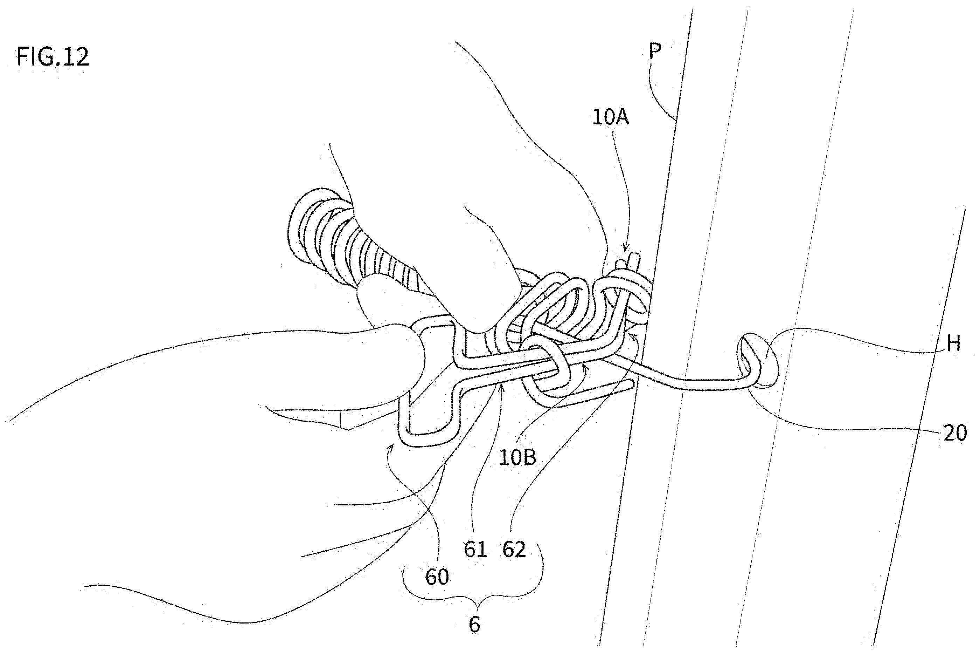

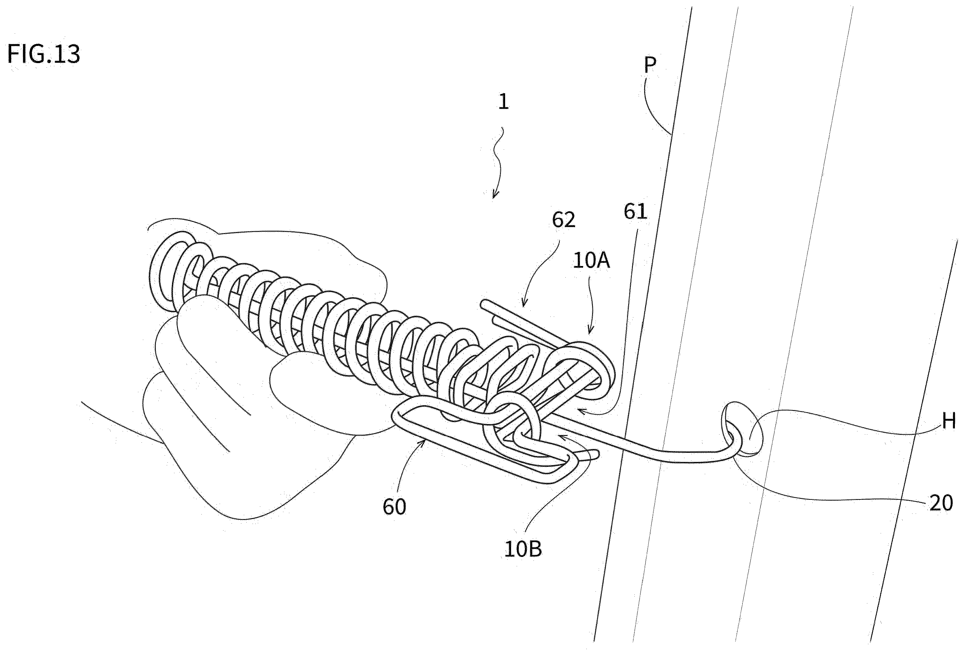

**.** At this point, it suffices to simply insert the legs 62 of the key tensioning element 6 into both the first 10A and second 10B slots of the seat 5. In the case represented in figure 10, the insertion into the second slot 10B entails the inclination of the key and its straightening so as to allow the body 61 to pass through (figure 11). Given that the body and legs are bent onto each other by about 90°, the switching of the legs to the first slot 10A could require a slight forcing, specifically due to the fact that the legs could be jammed engaging the second slot (figure 12) in a crossed manner. In any case, with a slight effort it is possible to overcome such jamming so as to straighten the body along the axis Y-Y and allow the legs to be safely arranged transversely with respect to said axis outside the second slot 10 (figure 13).

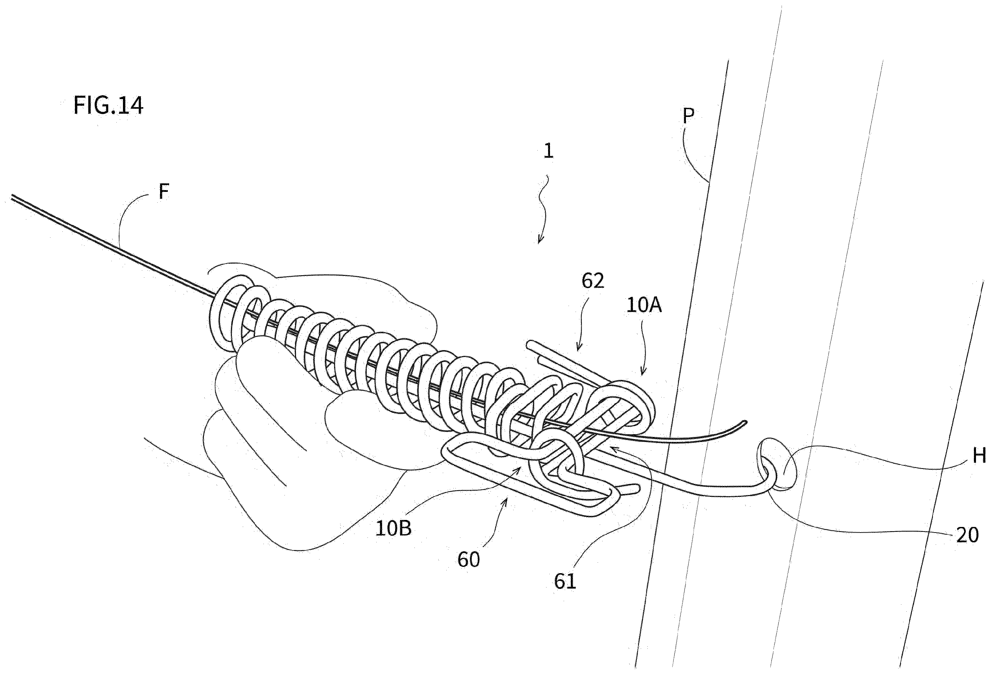

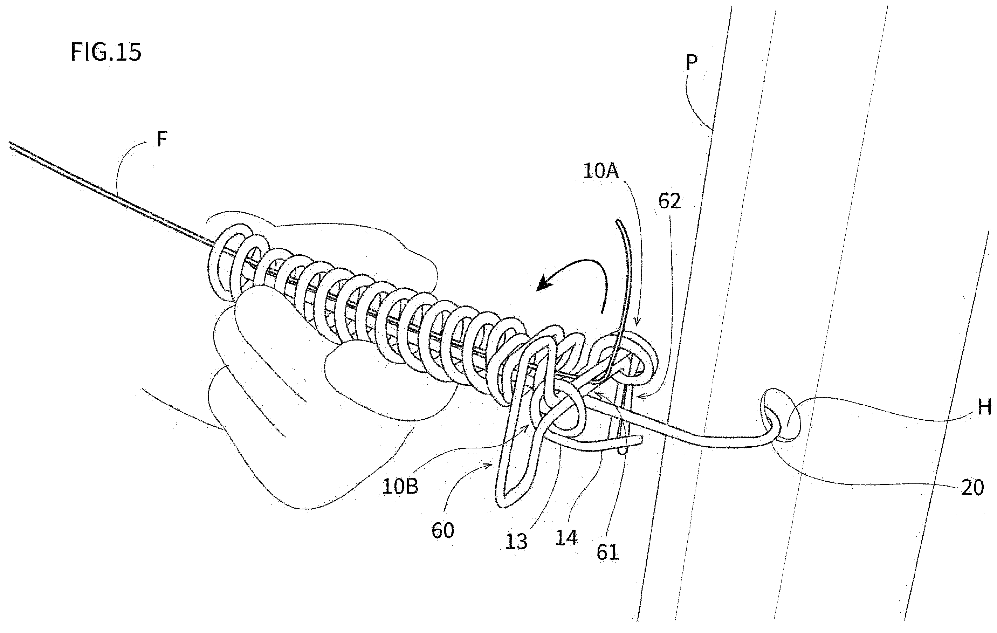

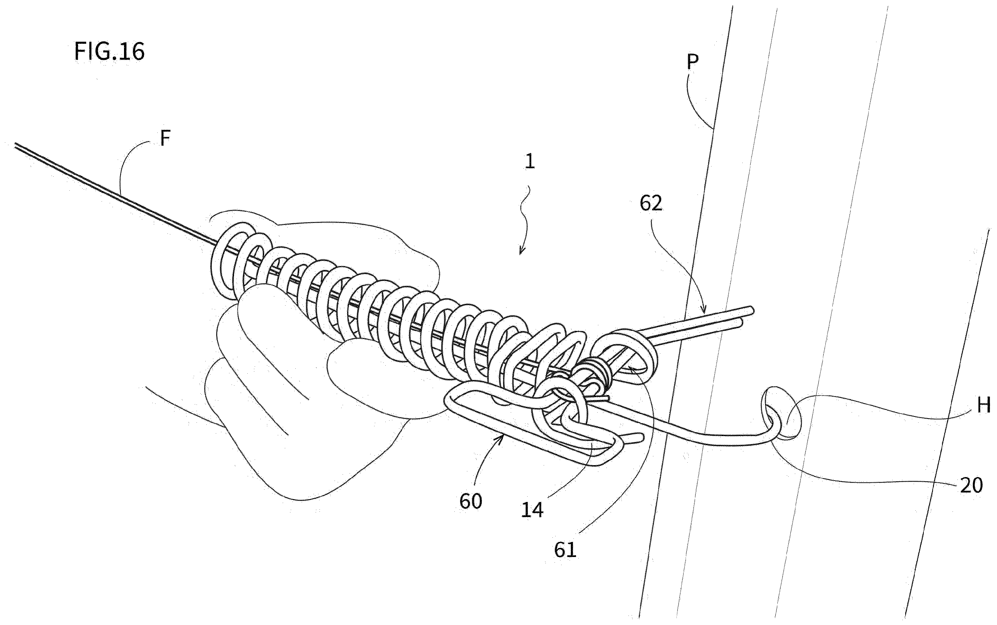

**.** Now, a wire F to be tensioned can be inserted from the second end portion 3 up to engaging the space between the two parallel segments of the body and start to screw the key from the head 60 to wind the wire around the body 61 (figure 14). Advantageously, during such rotation, for each 180° half-revolution (as shown by the arrow of figure 15), the head of the key exceeds the inclined segment 13 of the seat 5 of the tensioning element elastically forcing it to bend towards the axis X-X of the device. Once exceeded, this segment snaps returning to position and the return of the head 60 of the key is blocked by the safety terminal segment 14 (figure 16).

**.** A further object of the present invention is a system 100 (figure 1) for supporting rows of plants, comprising at least one end pole PE or head pole secured to the ground using conventional means such as for example concrete bases. Furthermore, the end pole is generally wind-braced using wind-bracing wires FC secured to the ground using conventional anchors.

**.** Alternatively or combined, to the head pole there may be preferably connected a pole driven vertically into the ground through a first profile (not shown) positioned at the upper end portions of said head pole and of the corresponding vertical pole, and possibly through a second section positioned at the lower end portions of said poles driven into the ground so as to constitute a rigid structure which withstands the tension of the wires of the row, as described in patent EP2988589.

**.** Fixed wires FM (or load-bearing wires as defined in said patent and distinct from the containment wires instead indicated as FM) are fixed to the two end poles PE at a preestablished and unvaried height so as to support the fruit cane of a plant. Furthermore, these wires are maintained at such height from the ground along the entire system due to the engagement with conventional hooks (not shown) obtained on each intermediate pole PI. These hooks are also distributed along the pole so as to ensure different positioning of the movable wires, as usual, so as to follow and support the extension of the vegetation.

**.** Movable wires F3 are connected, at least at one end portion, to the elastically compensating devices 1 according to the present invention, the devices in turn being fixed to the end poles PE. Said movable wires can be positioned at various heights (F1, F2, F3) so as to follow the growth of the vegetation.

**.** Yet another object of the invention is method for supporting plants along rows, comprising the steps of:
- fixing two end poles PE, that are wind-braced using suitable means, into the ground at a predetermined distance;
- arranging in a straight line between said two end poles PE a plurality of intermediate poles PI comprising hooks for reversibly hooking wires F for supporting the plants;
- fixing to said two head poles at least one fixed wire FM for supporting a fruit cane of said plants and a plurality of movable wires F1-F4 on two sides of said head poles so as to cover the entire length of the row in a parallel fashion and delimiting a space for containing the branches of the growing plants, wherein said step for fixing the plurality of movable wires F1-F4 is obtained by means of elastically compensating devices 1 as described above.

**.** In the light of the above, it is clear that the drawbacks of the prior art have been overcome and the significant advantages have been achieved.

**.** First and foremost, the complex structure of the elastically compensating devices been simplified significantly. As a result, the complexity and production times have also been significantly reduced.

**.** Secondly, this simplification enables to avoid problems linked to easier breaking and malfunctions.

**.** Advantageously, providing single wire element which suitably shaped in all the functional portions obviously significantly reduces production costs and enables an accurate control of the device.

**.** Furthermore, the single wire device does not require any assembly operation specifically due to the fact that it exits from the forming machine already finished, therefore without additional operations.

**.** The first end portion for hooking to the pole can be shaped at will to meet any needs depending on the type of pole to which the device is to be hooked. Preferably, the hook-like shape described and represented in the figures enables to insert using only one hand the terminal portion into a pole through a simple hole already present and prevent it from being released accidentally.

**.** The seat 5 for the key or roller tensioning element allows an easy insertion of the element and a safe guide for the rotation thereof.

**.** Then, advantageously the use of a key tensioning element like the one described above is not only easy to fit but also particularly safe given that the portion of the head cooperates with the inclined segment and the terminal segment of the seat of the tensioning element to form an element for guiding the winding of the wire to be tensioned and a safety block against the unwinding of the wire.

**.** Furthermore, the second coil 42 creates an element for stabilising the straight axis during strong compressions of the spring.

**.** Lastly, the possibility of envisaging a second seat for a further and different wire tensioning element of clamping type makes the elastically compensating wire-tensioning device of the present invention particularly versatile.

**.** Further changes to the device of the invention can be implemented by the person skilled in the art without departing from the scope of protection of the attached claims.

## Claims

1. Device (1) for tensioning wires (F) for supporting plants, which extends along an axis (X-X) and comprising a first end portion (2) for hooking to a pole, a second end portion (3) opposite to said first end portion, a compression elastic element (4) between said first and second end portions, a seat (5) for engaging with a wire tensioning element (6), **characterised in that** said first (2) and second (3) end portions, said elastic element (4) and said seat (5) are formed by a single shaped wire (7) with a first end (8) which is the end of said first end portion, a rectilinear portion (9) which extends from said first end portion and terminates with a first coil (40) which forms said second end portion, a plurality (41) of coils which extend from said first coil around said rectilinear portion forming said elastic element (4), two slots (10A, 10B) having an axis (Y-Y) that is common and transversal to said axis (X-X) of the device and formed by the continuation of said plurality of coils (41), followed by a rectilinear segment (14) orthogonal to said axis (X-X) of the device and terminating in a second end (11) of said single wire (7).

2. Device (1) according to claim 1, wherein said first end portion (2) is formed by a generally hook-shaped bending for engagement with one or more holes of a pole.

3. Device (1) according to claim 2, wherein said bending comprises a first folding (20) generally U shaped which is the continuation of the rectilinear portion (9) and which lies on a first plane (A-A) along the axis (X-X), said U continues with a ring-like bending (21) facing towards one side of the axis (X-X) and which extends on a plane (B-B) generally orthogonal to said first plane (A-A) of the first folding, said ring (21) continues with a rectilinear segment (22) which extends towards the device and parallel to the axis (X-X) terminating with said first end (8).

4. Device (1) according to any one of claims 1 to 3, wherein the plurality of coils (41) terminates the winding around the rectilinear portion (9) and forms a first slot (10A) on one side of said portion, then with a rectilinear segment (12) of the wire (7) it passes through the axis (X-X) and on the opposite side with respect to said first slot said segment it folds to form a second slot (10B), the second ring continuing with a segment (13) inclined with respect to the axis (X-X) and moving away towards the first end (2), followed by a terminal segment (14) rectilinear and orthogonal to the axis (X-X) which terminates with the second end (11).

5. Device (1) according to any one of claims 1 to 4, wherein the tensioning element (6) is formed by a key having a wide and flat head (60) from which there departs a rectilinear and thin body (61) which terminates with at least a leg (62) bent orthogonally with respect to said body.

6. Device (1) according to claim 5, wherein said tensioning element (6) is formed by a single metallic piece of wire bent in order to form the ring-like head, the body with two rectilinear segments and the two legs which form the end segments of the piece.

7. Device (1) according to any one of claims 1 to 6, wherein after said first coil (40) mentioned above, the second end portion (3) of the device comprises a second coil (42) which winds around said rectilinear portion (9) more closely with respect to both the first coil and the following plurality of coils (41).

8. Device (1) according to any one of claims 1 to 7, further comprising a seat (15) for retaining a wire tensioning element of clamping type, formed by several windings of the plurality of coils (41) shaped to create a sort of pocket for holding a wire tensioning element of clamping type.

9. Device (1) according to claim 8, wherein said seat (15) is formed by a first abutting coil (16) tightened around a segment of the rectilinear portion (9) of the wire (7) and by at least one second retaining coil (17), the first coil being closer to the second end (3) while the second coil being connected with the coils of the seat (5) for the key or roller tensioning element (6).

10. Method for supporting plants along rows, comprising the steps of:
- fixing two braced end poles (PE), using suitable means, into the ground at a predetermined distance;
- arranging in a straight line between said two end poles (PE) a plurality of intermediate poles (PI) comprising hooks for reversibly hooking wires (F) for supporting the plants;
- fixing to said two head poles at least one fixed wire (FM) for supporting a fruit cane of said plants and a plurality of movable wires (F1-F4) on two sides of said head poles so as to cover the entire length of the row in a parallel fashion and delimiting a space for containing the branches of the growing plants,
wherein said step of fixing the plurality of movable wires (F1-F4) is obtained by means of devices (1) according to any one of claims 1 to 9.
